# FASCICULE DE BREVET EUROPEEN

(11) **EP 1 795 147 B1**
(45) Date de publication et mention de la délivrance du brevet: **08.04.2009**
(21) Numéro de dépôt: 05292632.6
(22) Date de dépôt: 09.12.2005
(51) Int. Cl.: A61C 7/20, A61C 7/28, A61C 7/14, A61C 7/22

(54) **Attache pour arc orthodontique pour la mise en oeuvre d'un procédé d'orthopédie dento-facial.**
Orthodontisches Zahnbracket für kieferorthopädischen Behandlung.
Orthodontic bracket for performing a dento-facial orthodontic treatment.

(43) Date de publication de la demande: 13.06.2007
(73) Titulaire: Contencin, Bernard, 97354 Remire-Montjoly (FR)
(72) Inventeur: Contencin, Bernard, 97354 Remire-Montjoly (FR)
(74) Mandataire: Ravenel, Thierry Gérard Louis

(56) Documents cités:
- EP-A- 0 420 059
- EP-A1- 1 080 697
- EP-A2- 1 184 005
- WO-A-00/76419
- WO-A-94/16667
- WO-A-97/00051
- WO-A-20/05048868
- WO-A-20/06007707
- DE-A1- 4 440 810
- GB-A- 2 187 645
- US-A- 3 838 515
- US-A- 4 681 538
- US-A- 4 698 017
- US-A- 4 725 229
- US-A- 4 799 882
- US-A- 5 120 218
- US-A- 5 269 681
- US-A- 5 344 315
- PATENT ABSTRACTS OF JAPAN vol. 1999, no. 04, 30 avril 1999 (1999-04-30) & JP 11 019100 A (KOBAYASHI MASAHIRO; WATARI FUMIO; IMAI TORU; NAKAMURA SHINJI; UNITIKA), 26 janvier 1999 (1999-01-26)

## Description

La présente invention concerne un procédé d'orthopédie dento-faciale utilisant des attaches collées par l'intermédiaire de leur base sur chacune des dents dont on veut corriger la position. Ces attaches présentent chacune une gorge dans laquelle est introduit un arc orthodontique appelé arc thérapeutique.

L'orthopédie dento-faciale est la branche de la chirurgie dentaire qui traite des mauvaises positions des dents et de la thérapeutique corrective associée. Elle consiste donc à déplacer des dents en contrôlant leur position au moyen d'un système mécanique qui comprend, d'une part, des pièces ou attaches collées aux dents dont on veut corriger la position et, d'autre part, un élément indépendant de la dent, constitué par un fil métallique couramment appelé arc orthodontique qui vient se loger dans la gorge prévue dans les attaches collées aux dents.

Trois systèmes d'attaches orthodontiques au moins sont connus.

Le premier de ces systèmes comprend des attaches classiques dites actives qui reçoivent l'arc orthodontique. Celui-ci est maintenu au moyen de ligatures métalliques ou élastomériques. Un tel système, connu par exemple par le document de brevet EP 0 379 668, présente plusieurs inconvénients. La force d'immobilisation qu'exerce une ligature métallique sur un arc orthondique rond de diamètre 0,5 mm est de l'ordre de 125 g/cm². Avec une ligature élastomérique, cette force est encore de 50 à 100 g/cm². Or, des études biologiques ont montré que la force à appliquer sur une dent dont on veut corriger la position ne doit pas excéder 20 à 25 g/cm². Les forces d'immobilisation résultant d'un ligaturage au moyen d'un fil métallique ou élastomérique excèdent donc les limites biologiques parodontales et entraînent une compression des capillaires parodontaux, empêchant la circulation sanguine dans les capillaires. D'autre part, il est très difficile avec cette technique de procéder à des traitements sans extractions dentaires dans les cas d'encombrements supérieurs à 6 mm.

D'autres systèmes d'attaches dits autoligaturants ont été proposés pour résoudre ces problèmes d'encombrement. Ces systèmes peuvent être rangés sous deux catégories. La première catégorie regroupe les systèmes d'attaches autoligaturantes dites passives qui laissent à l'arc orthodontique un jeu variable dans l'attache jusqu'à ce que ledit arc atteigne la dimension maximale prévue par le constructeur. Un tel système d'attaches est par exemple exploité par la société Ormco. La seconde catégorie regroupe les systèmes d'attaches dites interactives qui se comportent comme des attaches passives vis-à-vis des arcs orthodontiques de petites dimensions et qui se comportent comme des attaches actives lorsque les dimensions des arcs augmentent. Un tel système est par exemple connu du document de brevet DE 44 07100 au nom de Wolfgang Heiser exploité par la société American Orthodontics.

Ces attaches autoligaturantes présentent certains inconvénients. Elles présentent tout d'abord une épaisseur majorée découlant de la nécessité de devoir prévoir un système mécanique en remplacement des ligatures, d'où une augmentation du risque de voir ces attaches se décoller lors de la mastication en raison du bras de levier plus important offert. Par ailleurs, ces attaches sont le plus souvent métalliques, ce qui est peu esthétique. Il existe bien des attaches réalisées en résine synthétique, mais elles ont tendance à s'user prématurément en raison de leurs faibles qualités mécaniques. En outre, ces attaches en résine ont tendance à absorber les colorants alimentaires et à devenir rapidement disgracieuses. On notera également qu'au fur et à mesure de l'augmentation de la section des arcs orthodontiques à installer, ceux-ci deviennent de plus en plus difficiles à mettre en place dans les attaches en raison de leur rigidité accrue qui rend plus difficile la fermeture du système de verrouillage en raison de la diminution de leur jeu dans lesdites attaches. On notera enfin qu'en raison de la corrosion par la salive des pièces élastiques métalliques dans la cavité buccale, les caractéristiques mécaniques des systèmes de fermeture des attaches se modifient et peuvent se dégrader par oxydation au cours du temps.

Le document EP 11080538 décrit une attache pour arc pour orthodontique suivant le préambule de la revendication 1.

La présente invention a pour but de remédier aux inconvénients susmentionnés ainsi qu'à d'autres encore en procurant un procédé d'orthopédie dento-faciale permettant notamment de réduire considérablement la force d'immobilisation qui s'exerce sur un arc orthodontique et de la ramener à des valeurs très faibles, proches de zéro, biologiquement acceptables.

A cet effet, la présente invention peut-être utilisée dans un procédé d'orthopédie dento-faciale utilisant des attaches comme revendiquées dans la revendication 1 collées par l'intermédiaire de leur base sur chacune des dents dont on veut corriger la position, ces attaches présentant chacune une gorge dans laquelle est introduit un arc orthodontique thérapeutique de manière à provoquer un déplacement des dents tel qu'en fin de traitement, après retrait de l'arc orthodontique thérapeutique, lesdites dents se trouvent dans la position souhaitée, l'arc orthodontique thérapeutique étant maintenu dans les gorges des attaches au moyen de ligatures, caractérisé en ce que :
- on introduit dans les gorges des attaches un premier arc orthodontique à but thérapeutique, devant rester en bouche;
- on place en surépaisseur, à la suite du premier arc orthodontique thérapeutique, un second arc orthodontique provisoire;
- on serre les ligatures de manière à mettre en forme lesdites ligatures et à plaquer les deux arcs orthodontiques contre le fond des gorges des attaches, et
- une fois les ligatures serrées et mises en forme, on retire l'arc orthodontique provisoire de façon à obtenir des ligatures lâches présentant un jeu constant avec le premier arc orthodontique thérapeutique.

Grâce à ces caractéristiques, un procédé d'orthopédie dento-faciale est procuré dans lequel l'arc orthodontique thérapeutique est maintenu au moyen de ligatures lâches permettant de réduire les forces d'immobilisation qui s'exercent sur l'arc et de les ramener à des valeurs très faibles, presque nulles, bien en deçà du seuil biologiquement acceptable. Ces ligatures lâches présentent un jeu constant et déterminé par rapport à l'arc orthodontique thérapeutique grâce à l'utilisation d'un sur-arc orthodontique temporaire qui permet de ramener les forces induites par ces ligatures à des valeurs extrêmement faibles en supprimant les forces de blocage et d'encochage des ligatures classiques. La présente invention s'applique à tout type d'attache et notamment aux attaches en matériau céramique, ce qui permet d'améliorer considérablement l'aspect esthétique d'un système à attaches. Les attaches conventionnelles utilisées dans le cadre de l'invention sont rendues passives en raison de l'existence d'un jeu entre l'arc orthodontique thérapeutique et les ligatures et ceci durant toute la durée du traitement, indépendamment de la progression en dimension de l'arc. On notera également que l'insertion de l'arc orthodontique thérapeutique dans les gorges des attaches s'avère aussi facile que dans les techniques conventionnelles pour des arcs de dimensions plus importantes.

Un aspect, concerne un arc orthodontique caractérisé en ce qu'il comprend au moins deux brins solidarisés l'un avec l'autre en un endroit de leur longueur.

L'arc orthodontique dont il s'agit ici est l'arc provisoire qui, conformément au procédé d'utilisation, est destiné à être placé en surépaisseur sur l'arc orthodontique à visée thérapeutique et qui est retiré après serrage par torsadage des ligatures. L'avantage d'un tel arc réside dans le fait que les deux brins ou éventuellement plus dont il est constitué, bien qu'assimilables à un arc unique de section rectangulaire, présentent une force de résistance à la flexion identique dans toutes les directions de l'espace dans le cas d'une flexion sur chant et plus faible que celle d'un arc orthodontique formé d'un seul brin de section rectangulaire équivalente. L'arc provisoire est donc plus aisé à déformer et à mettre en place cliniquement ainsi qu'à retirer après ligaturage.

La présente invention concerne une attache suivant la revendication indépendante 1 pour arc orthodontique thérapeutique utilisé dans le domaine de l'orthopédie dento-faciale, cette attache comprenant une base par laquelle elle est collée sur la dent dont on cherche à corriger la position ainsi qu'un support qui s'étend à partir de la base et dans lequel est prévue une gorge destinée à recevoir l'arc orthodontique thérapeutique, ce support étant prolongé par une paire de crochets ou ailettes qui s'étendent de part et d'autre de la gorge et qui délimitent avec ledit support une rainure curviligne parallèle à la gorge pour recevoir une ligature destinée à maintenir l'arc orthodontique thérapeutique, lesdites rainures étant plus profondes dans les zones d'extrémité des ailettes.

Les rainures sont conçues et fabriquées plus profondes dans les angles extérieurs des ailettes de façon à s'assurer que les ligatures qui présentent un jeu calculé avec l'arc orthodontique thérapeutique après retrait de l'arc orthodontique provisoire ne puissent se détacher des attaches.

D'autres caractéristiques et avantages de la présente invention ressortiront plus clairement de la description détaillée qui suit d'un mode de mise en oeuvre du procédé, cet exemple étant donné à titre purement illustratif et non limitatif seulement, en liaison avec le dessin annexé sur lequel :
- la figure 1 est une vue en perspective d'une arcade dentaire équipée d'attaches ainsi que d'un arc orthodontique à visée thérapeutique;
- la figure 2 est une vue en perspective d'une dent de l'arcade dentaire de la figure 1 munie d'une attache dans laquelle ont été introduits l'arc orthodontique thérapeutique et l'arc provisoire, la ligature de l'attache étant sur le point d'être torsadée;
- la figure 3 est une vue analogue à celle de la figure 2, la ligature de l'attache ayant été serrée de manière à plaquer les deux arcs orthodontiques contre le fond de la gorge de l'attache;
- la figure 4 est une vue analogue à celle de la figure 3 sur laquelle l'arc orthodontique provisoire a été partiellement retiré;
- la figure 5 est une vue analogue à celle de la figure 4 sur laquelle l'arc orthodontique provisoire a été complètement retiré, laissant un jeu entre la ligature et l'arc orthodontique thérapeutique devant rester en bouche;
- les figures 6A, 6B et 6C sont respectivement des vues en perspective d'un arc orthodontique provisoire et d'une plaquette de maintien de cet arc;
- les figures 7A à 7C sont des vues en coupe transversale des brins d'un arc orthodontique provisoire présentant respectivement une section circulaire, une section carrée à bords arrondis et formés de plusieurs brins;
- la figure 8 est une vue partielle et en perspective d'une arcade dentaire supérieure droite sur laquelle sont notamment visibles l'attache terminale dans laquelle passe l'arc orthodontique thérapeutique destiné à rester en bouche et la pièce de maintien de l'arc provisoire;
- la figure 9 montre l'immobilisation temporaire de l'arc provisoire au niveau de l'incisive centrale de l'arcade dentaire supérieure gauche;
- la figure 10 montre en perspective la première ligature effectuée sur la première prémolaire;
- la figure 11 montre en perspective la deuxième ligature effectuée sur la deuxième prémolaire, la plaquette de maintien ayant été retirée;
- la figure 12 montre en perspective l'étape de ligature de la canine;
- la figure 13 montre en perspective l'arcade dentaire supérieure droite complètement ligaturée jusqu'à l'incisive centrale droite;
- la figure 14 est une vue schématique de dessus d'une arcade dentaire le long de laquelle sont placés deux demi-arcs orthodontiques provisoires,
- la figure 15A est une vue en perspective d'une attache en céramique dans laquelle ont été pratiquées des creusures qui débouchent dans la face latérale des crochets;
- la figure 15B est une vue analogue à celle de la figure 15A, l'arc orthodontique thérapeutique et l'arc orthodontique provisoire étant maintenus en place par une ligature;
- la figure 15C est une vue de dessus de l'attache illustrée à la figure 15B;
- les figures 16A à 16C sont des vues analogues à celles des figures 15A à 15C respectivement, l'attache étant une attache en un matériau résistant, par exemple métallique, dans laquelle sont pratiquées des creusures plus profondes qui débouchent dans la face latérale et frontale des crochets, et
- la figure 16D est une vue de côté de l'attache illustrée à la figure 15B.

Un procédé de même qu'un dispositif pour l'utilisation de manière passive d'un système d'attaches classiques destinées à recevoir un arc orthodontique thérapeutique à visée médicale devant rester en bouche sont divulgués. A cet effet, on introduit dans les gorges des attaches un premier arc orthodontique thérapeutique à visée médicale classique destiné à corriger l'orientation des dents, puis un second arc provisoire placé en surépaisseur sur le premier arc, à la suite de quoi on serre les ligatures des attaches pour les mettre en forme et pour plaquer les arcs au fond de la gorge des attaches. Une fois les ligatures serrées, on retire l'arc provisoire de sorte qu'il subsiste un jeu entre lesdites ligatures et l'arc thérapeutique devant rester en bouche. On a ainsi supprimé les forces de friction dues au blocage de l'arc orthodontique thérapeutique par la ligature lors de la mise en forme de celle-ci par serrage et de son torsadage sur l'attache. La ligature n'exerce plus de force de friction par blocage, mais seulement par friction classique comme cela est décrit dans les articles de Kusy RP. intitulé "Ongoing innovations in biomechanics and materials for the new millenium" paru dans Angle Orthod 2000 (70 366-376) et de Thorstenson G. intitulé "Etude sur la friction des brackets SmartClip™ auto-ligaturants" paru dans Orthodontics Pespectives Volume Xll n°1.

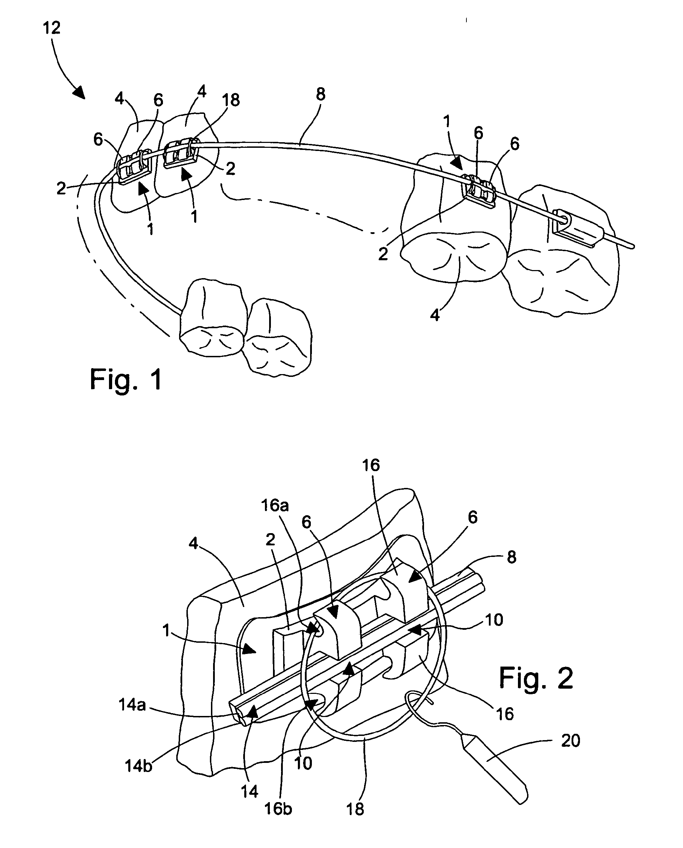

Comme on peut le voir aux figures 1 et 2, le procédé d'orthopédie dento-faciale utilise des attaches 1 collées par l'intermédiaire de leurs bases 2 sur la face vestibulaire des dents 4 mal positionnées et dont on cherche à corriger le positionnement en les déplaçant. Ces attaches 1 comprennent également, sur la face libre de leurs bases 2, une paire de supports 6 d'un arc orthodontique 8 à visée thérapeutique (voir figure 2). Ces supports 6 sont disposés parallèlement et à distance l'un de l'autre selon une direction transversale à la direction longitudinale de l'arc orthodontique thérapeutique 8. Ils comportent chacun une gorge 10 ouverte du côté de la lèvre du patient et qui est alignée avec la gorge 10 du support 6 en regard, de façon que l'arc 8 puisse passer dans ces gorges 10 en épousant le contour de l'arcade dentaire 12.

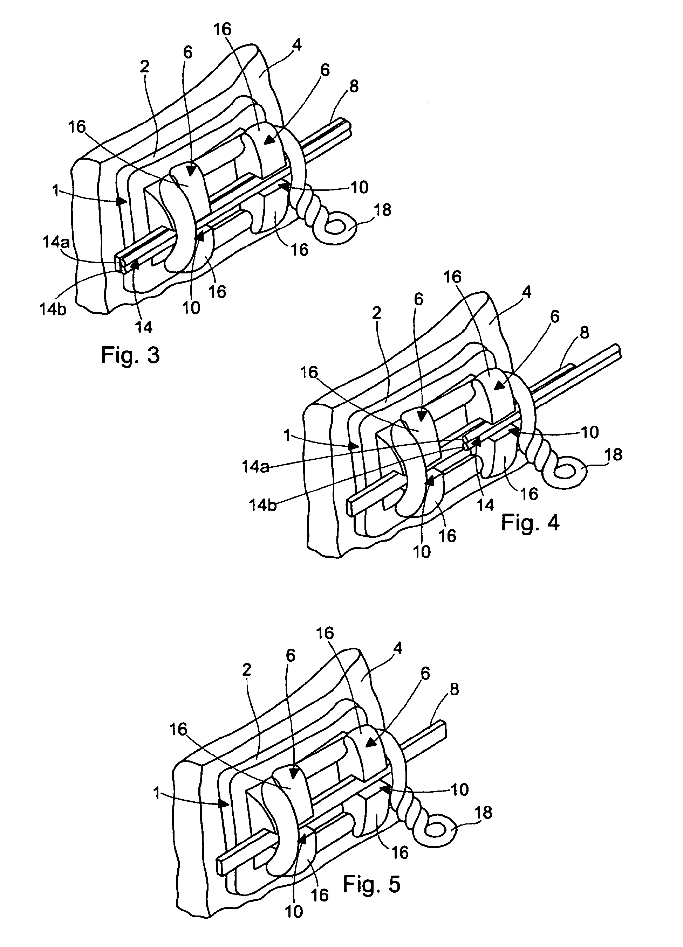

Comme il peut être vu à la figure 2, un second arc orthodontique 14 est placé en surépaisseur à la suite du premier arc orthodontique thérapeutique 8. Comme décrit en détail ci-dessous, le second arc 14 est un arc provisoire qui a pour vocation d'être retiré après installation de l'arc 8 destiné à rester en bouche. A cet effet, chaque support 6 est prolongé à ses extrémités par un crochet ou ailette 16, ces crochets 16 délimitant une rainure supérieure 16a et une rainure inférieure 16b pour la fixation d'une ligature 18 destinée à plaquer les arcs orthodontiques 8 et 14 contre le fond des gorges 10 des supports 6. Les ligatures 18 sont passées dans les rainures supérieure 16a et inférieure 16b et au-dessus des arcs 8 et 14 avant d'être serrés, par exemple par torsadage au moyen d'un outil adapté 20 (voir figures 2 et 3). Ces ligatures 18 sont métalliques mais peuvent être élastomériques.

Après serrage des ligatures 18 (voir figure 3), l'arc orthodontique provisoire 14 est retiré, de sorte qu'il subsiste un jeu entre lesdites ligatures 18 et l'arc orthodontique thérapeutique 8 devant rester en bouche (voir figures 4 et 5). On minimise ainsi considérablement la force de maintien due à une ligature serrée s'exerçant sur l'arc orthodontique thérapeutique 8 en la ramenant à des valeurs résiduelles plus que biologiquement acceptables de l'ordre de 0,2 à 0,5 mg/cm². Par rapport à des ligatures classiques, on réduit donc les forces de friction entre ces ligatures et l'arc orthodontique d'un facteur compris entre 250 et 600 dans la mesure ou les forces de friction par blocage sont supprimées.

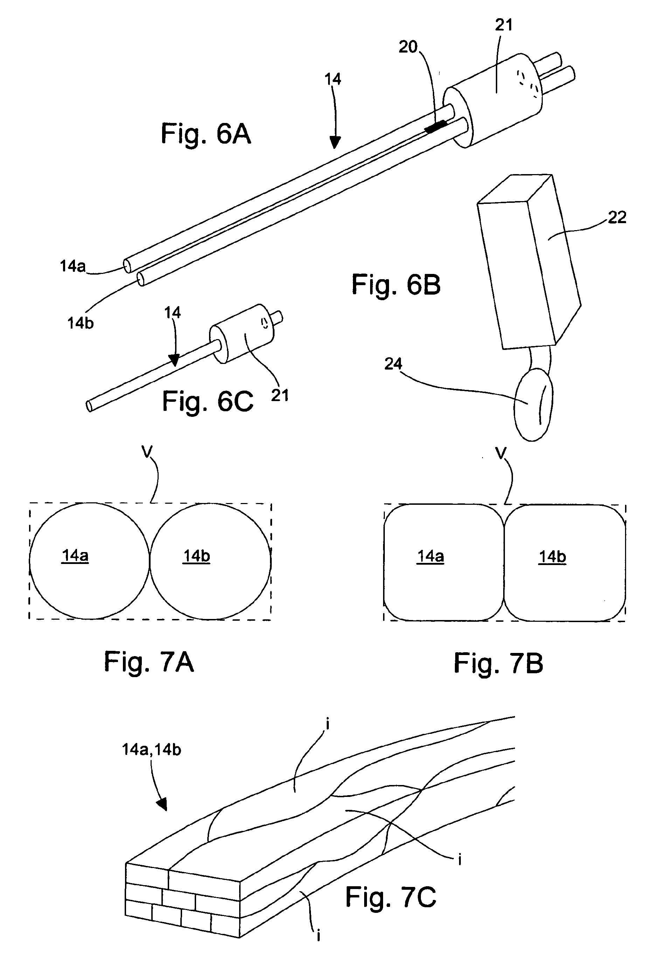

Comme représenté à la figure 6A, l'arc orthodontique provisoire 14 est formé d'au moins deux brins 14a et 14b rendus solidaires l'un de l'autre en un endroit de leur longueur, par exemple au moyen d'un point de soudage 20. Les deux brins 14a et 14b sont sensiblement de mêmes longueurs et sont préférentiellement mais non limitativement rendus solidaires l'un de l'autre au niveau de l'une de leurs extrémités. L'avantage principal d'un tel arc orthodontique 14 réside dans le fait que les deux brins 14a et 14b dont il est constitué présentent une résistance à la flexion sur chant plus faible qu'un arc orthodontique formé d'un seul brin de section rectangulaire équivalente. L'arc provisoire 14 est donc plus aisé à déformer et à mettre en place ainsi qu'à retirer après ligaturage. On notera que certaines situations cliniques nécessitent l'emploi d'arcs orthodontiques thérapeutiques de très faibles sections. Dans ces cas, l'arc othodontique provisoire 14 pourra être réduit à un seul brin, en sectionnant l'autre brin au ras de la sertissure 21 (voir figure 6C).

Comme on peut le voir à l'examen des figures 7A et 7B, les deux brins 14a et 14b s'inscrivent dans une enveloppe V dont la section est assimilable à un rectangle et dont les dimensions sont telles qu'elles permettent de loger l'arc 14 dans le profil des gorges 10. Les deux brins 14a et 14b peuvent être de section circulaire ou carrée à bords arrondis. Ils peuvent également être de section rectangulaire, composés de plusieurs brins i comme illustré à la figure 7C, les brins i étant tressés puis laminés. Plus généralement, ces brins 14a et 14b peuvent être réalisés en tout type de matériau en fonction des possibilités offertes par l'évolution de la technique, pour autant qu'ils puissent être courbés d'un même angle dans toutes les directions de l'espace.

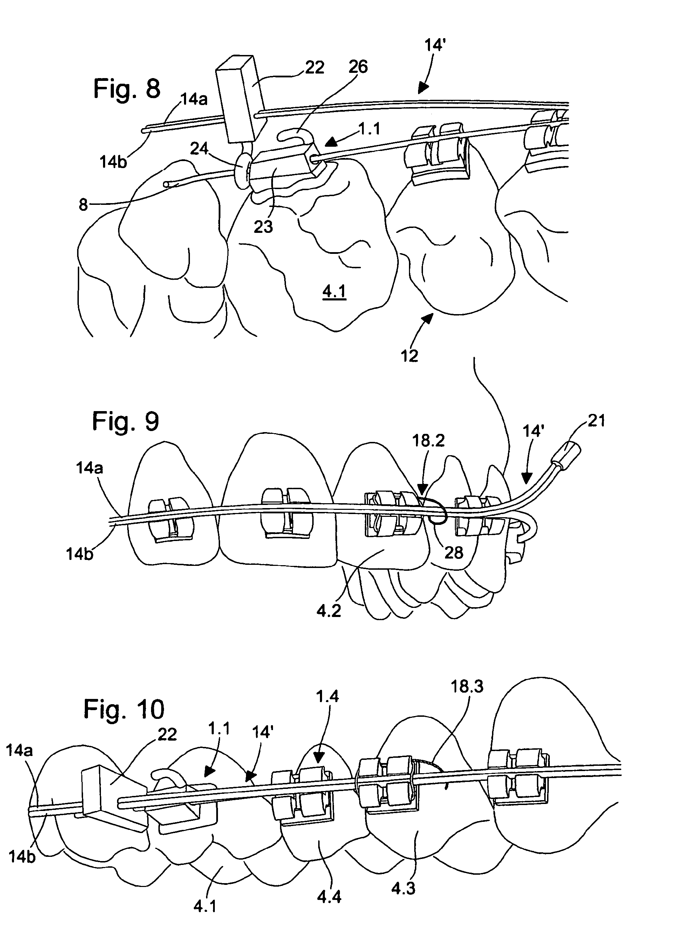

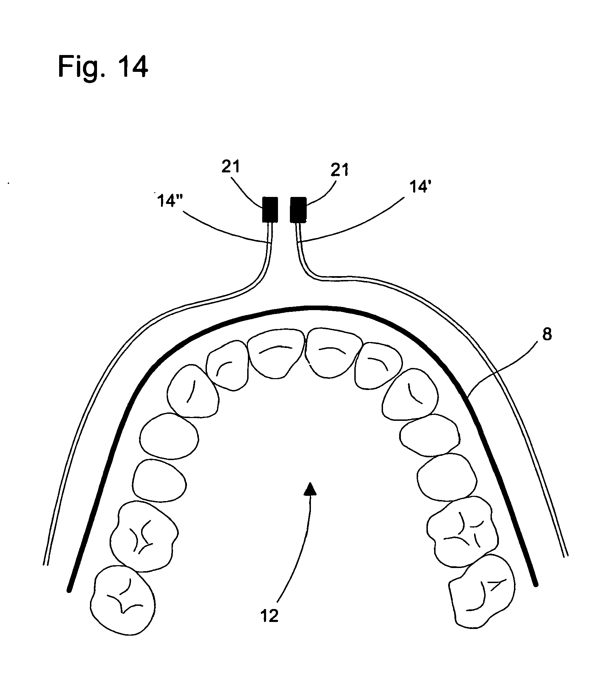

On s'intéresse maintenant au procédé de mise en place de l'arc provisoire 14 en liaison avec les figures 8 et suivantes. On pourrait installer un arc provisoire 14 dont la longueur correspondrait à celle de l'arcade dentaire 12 complète. Cela serait toutefois long et peu commode. C'est pourquoi on préfèrera installer en premier lieu l'arc orthodontique thérapeutique puis un premier et un second arc provisoires 14' et 14" dont les longueurs sont telles que leurs extrémités en regard, solidarisées par une sertissure 21, se rejoignent sensiblement au milieu de l'arcade dentaire 12 (voir figure 14). On va examiner la mise en place de l'un de ces deux arcs provisoires 14', 14" le long de la moitié droite de l'arcade dentaire supérieure 12, étant entendu que le déroulement des opérations est symétrique pour l'autre moitié de l'arcade dentaire.

Comme on peut le voir à l'examen de la figure 8, l'extrémité postérieure de l'arc orthodontique thérapeutique 8 destiné à rester en bouche est insérée dans le tube 23 d'une attache terminale 1.1 pour y être fixée. Quant à l'arc provisoire 14', il est piqué dans une plaque de maintien et de positionnement 22 (voir figure 6A) qu'il transperce et qui est prolongée par un anneau 24 que l'on peut, au choix, enfiler sur un crochet 26 de l'attache terminale 1.1 collée sur la molaire 4.1 si celle-ci en possède un ou sur l'extrémité postérieure dudit arc orthodontique thérapeutique 8 dépassant du tube 23. La fixation peut encore se faire sur l'attache la plus postérieure si les conditions cliniques l'exigent. La plaque de maintien 22 est avantageusement réalisée en un matériau élastique tel qu'un élastomère, uréthane ou autre. Quant à l'extrémité antérieure de l'arc orthodontique 14', elle est maintenue en place par une ligature provisoire 18.2 réalisée sur l'incisive centrale 4.2 de la moitié gauche de l'arcade dentaire supérieure 12 qui sera traitée dans une étape ultérieure du procédé (voir figure 9). Pour faciliter le maintien de l'arc orthodontique 14', on voit sur la figure 9 que la torsade résultant du serrage de la ligature provisoire 18.2 est recourbée en crochet 28. On notera également la présence, au niveau de l'extrémité antérieure dudit arc orthodontique 14', d'un renflement ou sertissure 21 qui peut être rapportée sur l'arc 14' par exemple par sertissage et qui est destinée à faciliter la manipulation de l'arc 14' au moyen d'outils de dentisterie classiques.

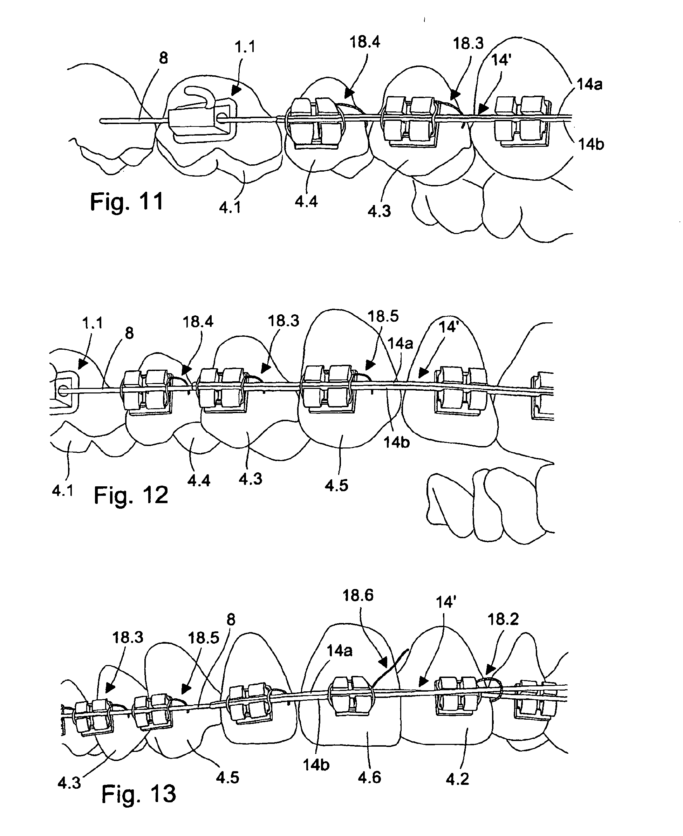

Au début de son positionnement, l'arc orthodontique provisoire 14' est donc maintenu à son extrémité postérieure par la plaque de maintien 22 et est passé sous la torsade recourbée en crochet 28 à son extrémité antérieure. On resserre alors la ligature 18.3 de la première prémolaire 4.3 en laissant libre l'attache 1.4 de la deuxième prémolaire 4.4 (voir figure 10). Après enlèvement de la plaque de maintien 22, on exerce une traction sur l'arc orthodontique 14' pour le faire glisser et amener son extrémité postérieure entre les attaches 1.1 et 1.4 de la molaire 4.1 et de la deuxième prémolaire 4.4. On peut alors serrer la ligature 18.4 de cette deuxième prémolaire 4.4 (voir figure 11). Par la suite, on tire à nouveau sur l'arc 14' pour le faire glisser et l'amener entre les deux prémolaires 4.3 et 4.4. On serre alors la ligature 18.5 de la canine 4.5 qui suit immédiatement les première et deuxième prémolaires 4.3 et 4.4 (voir figure 12). L'opération est répétée jusqu'à ce que l'on parvienne à l'incisive centrale 4.6 de la moitié droite de l'arcade dentaire supérieure comme représenté à la figure 13. On observera qu'en procédant de la sorte, l'arc orthodontique provisoire 14' n'est pas retenu par plus de deux ligatures à un instant donné de son installation, ce qui facilite son déplacement progressif en réduisant à un minimum les forces de frottement entre lesdites ligatures et ledit arc. Lorsque le procédé est terminé et que l'arc provisoire a complètement été retiré, on est en présence de ligatures qui ont été serrées et ainsi mises en forme sur les attaches mais entre lesquelles et l'arc orthodontique thérapeutique destiné à rester en place existe un jeu constant entre l'arc et la ligature pour chaque attache ce qui permet de réduire les forces de maintien s'exerçant sur ledit arc à des valeurs très faibles biologiquement acceptables. On procède ensuite de la même manière pour installer l'autre arc provisoire 14" sur la moitié gauche de l'arcade dentaire supérieure. On défait tout d'abord la ligature provisoire 18.2 réalisée sur l'incisive gauche 4.2 et on recourbe en crochet la torsade de la ligature 18.6 réalisée sur l'incisive droite 4.6. Une fois l'arc provisoire 14" maintenu à ses extrémités antérieure et postérieure, on répète avec la moitié gauche de l'arcade dentaire supérieure la succession des opérations décrites ci-dessus en liaison avec la moitié droite de l'arcade dentaire supérieure.

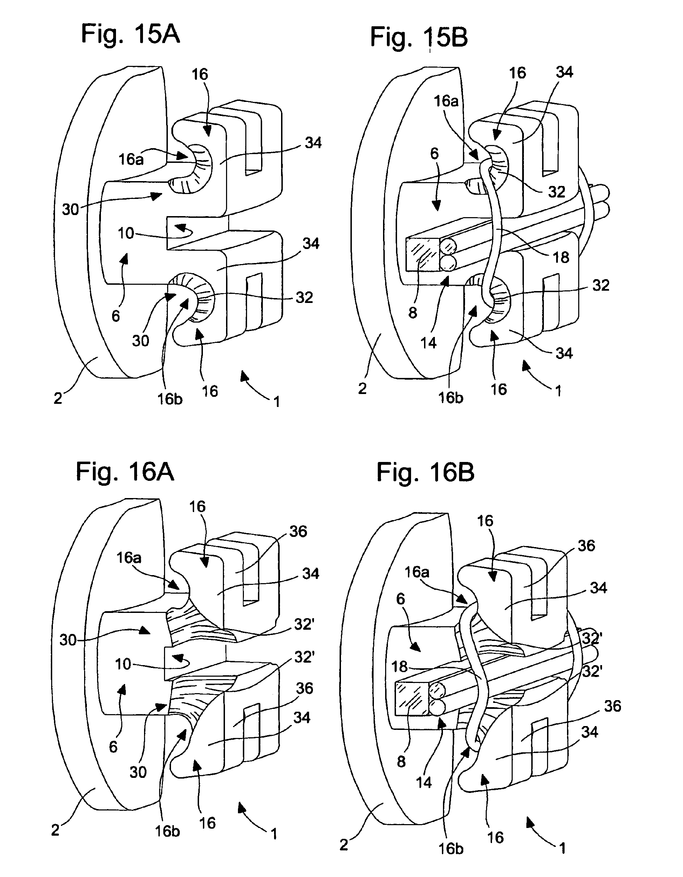

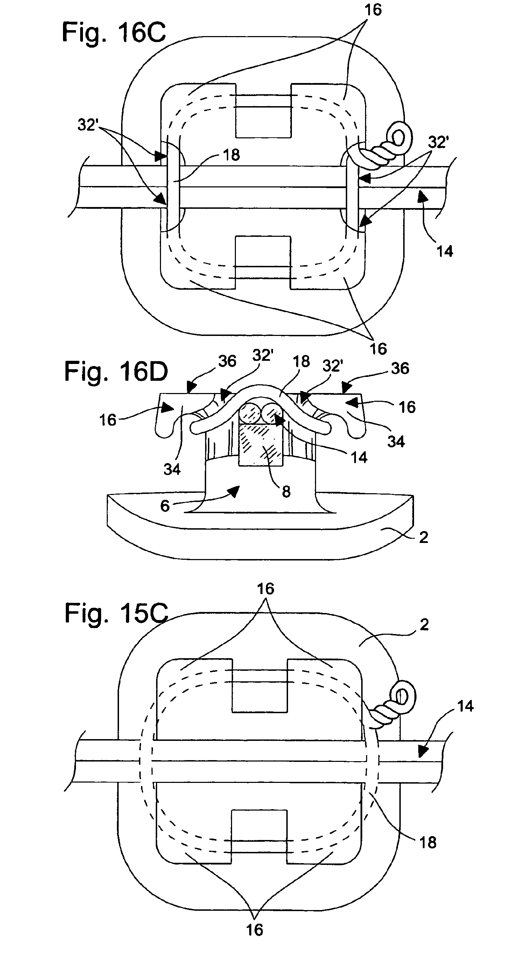

On examine maintenant en liaison avec les figures 15A à 15C la réalisation d'une attache 1 suivant l'invention réalisée en un matériau fragile tel qu'une céramique ou une résine. Comme déjà décrit ci-dessus, cette attache 1 pour arc orthodontique thérapeutique 8 utilisé dans le domaine de l'orthopédie dento-faciale comprend une base 2 par laquelle elle est collée sur la dent dont on cherche à corriger la position. Ladite attache 1 comprend également un support 6 qui s'étend à partir de la base 2 et dans lequel est prévue une gorge 10 destinée à recevoir l'arc orthodontique thérapeutique 8. Par ailleurs, le support 6 est prolongé par deux paires de crochets 16 qui s'étendent de part et d'autre de la gorge 10 et qui délimitent avec ledit support 6 deux rainures respectivement supérieure 16a et inférieure 16b parallèles à ladite gorge 10. Bien entendu, selon une variante, l'attache peut ne comprendre qu'une seule paire de crochets disposés de part et d'autre de la gorge et s'étendant tout le long de ladite gorge.

Les rainures 16a, 16b sont destinées à recevoir la ligature 18 qui permettra de maintenir l'arc orthodontique thérapeutique 8 avec une force très faible biologiquement acceptable. Comme on peut le voir à l'examen de la figure 15A, les rainures 16a et 16b sont plus profondes dans leurs zones d'extrémité 30 que sur le reste de leur longueur. Plus précisément, ces zones d'extrémité 30 sont conformées en creusures 32 qui débouchent dans la face latérale 34 des crochets 16. Ces creusures 32 ont pour effet de permettre d'éloigner la ligature 18 de l'extrémité des ailettes 16, ce qui empêche le dégagement de ladite ligature 18 une fois qu'elle a été ligaturée par torsadage sur l'arc orthodontique thérapeutique 8 et que l'arc orthodontique provisoire 14 a été retiré. Comme déjà mentionné ci-avant, l'attache 1 représentée sur les figures 15A à 15C est plutôt prévue pour des matériaux aux faibles qualités mécaniques du type céramique ou résine dont la résistance mécanique n'est pas aussi grande que celle d'une attache métallique. C'est la raison pour laquelle on ne fait déboucher la creusure que dans la face latérale 34 des crochets 16 afin de ne pas trop affaiblir la zone de liaison entre le support 6 et lesdits crochets 16. Par contre, dans le cas de l'attache 1 représentée en liaison avec les figures 16A à 16D, celle-ci est réalisée en métal. Sa résistance mécanique est donc supérieure à celle d'une attache en céramique, ce qui permet de faire déboucher les creusures 32' dans la face latérale 34 et dans la face frontale 36 des crochets 16. On éloigne ainsi encore davantage la ligature 18 de l'extrémité des crochets 16 sans que la zone de jonction entre lesdits crochets 16 et le support 6 ne soit affaiblie au point de risquer de rompre.

Il va de soi que la présente invention n'est pas limitée au mode de mise en oeuvre qui vient d'être décrit et que diverses modifications et variantes simples peuvent être envisagées par l'homme du métier sans sortir du cadre de l'invention tel que défini par les revendications annexées. En particulier, on adaptera la profondeur des creusures pratiquées aux extrémités des rainures en fonction de la distance maximum que l'on pourra observer entre l'arc orthodontique thérapeutique et la ligature après retrait de l'arc orthodontique provisoire.

## Revendications

1. Attache pour arc orthodontique (8) utilisé dans le domaine de l'orthopédie dento-faciale, cette attache (1) comprenant une base (2) par laquelle elle peut être collée sur la dent dont on cherche à corriger la position ainsi qu'un support (6) qui s'étend à partir de la base (2) et dans lequel est prévue une gorge (10) destinée à recevoir l'arc orthodontique (8), ce support (6) étant prolongé par une paire d'ailettes (16) qui s'étendent de part et d'autre de la gorge (10) et qui délimitent avec ledit support une rainure (16a, 16b) parallèle à ladite gorge (10), ladite rainure étant délimitée par la face latérale du support et la face dentale de l'ailette correspondante pour recevoir une ligature (18) destinée à maintenir l'arc orthodontique (8), et étant plus profonde dans ses zones d'extrémité que sur le reste de sa longueur pour former un chemin curviligne, **caractérisée en ce que** ces zones d'extrémité sont formées par des creusures qui débouchent dans chaque face latérale (34) des ailettes (16) s'étendant perpendiculairement à ladite gorge (10).

2. Attache pour arc orthodontique selon la revendication 1, **caractérisée en ce que** les zones d'extrémité sont conformées en creusures qui débouchent dans la face latérale et dans la face frontale des ailettes (16).

3. Attache pour arc orthodontique selon la revendication 2, **caractérisée en ce qu'**elle est réalisée en un matériau céramique ou synthétique.

4. Attache pour arc orthodontique selon la revendication 2, **caractérisée en ce qu'**elle est réalisée en un matériau métallique.

## Claims

1. A bracket for therapeutic orthodontic arch wire (8) used in the dento-facial orthopedics field, the bracket (1) comprising a base (2) via which the bracket can be bonded onto a tooth whose position is to be corrected and a support (6) that extends from the base (2) and in which a slot (10) is provided for receiving the therapeutic orthodontic arch wire (8), wherein the support (6) is extended by a pair of wings (16) that extend on either side of the slot (10), wherein the pair of wings (16), delimit with the support, a groove (16a, 16b) parallel to said slot (10), said groove being delimited by the lateral face of the support and by the dental face of the corresponding wing, for receiving a ligature (18) for holding therapeutic orthodontic arch wire (8), and being deeper in its end zones than over the rest of its length so as to form a curvilinear path, **characterized in that** these end zones are formed by hollows that open out into each lateral (34) face of the wings (16) extending perpendicularly to said slot (10).

2. A bracket for therapeutic orthodontic arch wire according to claim 1, **characterized in that** the end zones are hollow-shaped that open out into a lateral face and into a front face of the wings (16).

3. A bracket for therapeutic orthodontic arch wire according to claim 2, **characterized in that** the bracket is made of a ceramic or synthetic material.

4. A bracket for therapeutic orthodontic arch wire according to claim 2, **characterized in that** the bracket is made of a metallic material.

## Patentansprüche

1. Bracket für orthodontischen Bogen (8), der im Bereich der Kieferorthopädie eingesetzt wird, wobei dieses Bracket (1) eine Basis (2) enthält, über welche es auf den Zahn aufgeklebt werden kann, der in seiner Stellung korrigiert werden soll, sowie einen Träger (6), der sich ausgehend von der Basis (2) erstreckt und in welchem ein Schlitz (10) vorgesehen ist, der dazu bestimmt ist, den orthodontischen Bogen (8) aufzunehmen, wobei dieser Träger (6) von einem Paar Flügel (16) fortgesetzt wird, die sich beiderseits des Schlitzes (10) erstrecken und mit dem Träger eine parallel zum Schlitz verlaufende Rille (16a, 16b) begrenzen, wobei die Rille von der Seitenfläche des Trägers und der zahnseitigen Fläche des entsprechenden Flügels begrenzt wird, um eine zum Festhalten des orthodontischen Bogens (8) bestimmte Ligatur (18) aufzunehmen, und in ihren Endbereichen tiefer als über ihre restliche Länge ausgeführt ist, um einen gekrümmten Pfad zu bilden, **dadurch gekennzeichnet, dass** ihre Endbereiche aus Vertiefungen gebildet sind, die in jede senkrecht zum Schlitz (10) verlaufende Seitenfläche (34) der Flügel (16) ausmünden.

2. Bracket für orthodontischen Bogen (8) nach Anspruch 1, **dadurch gekennzeichnet, dass** die Endbereiche zu Vertiefungen ausgebildet sind, die in die Seitenfläche und in die Stirnfläche der Flügel (16) ausmünden.

3. Bracket für orthodontischen Bogen (8) nach Anspruch 2, **dadurch gekennzeichnet, dass** es aus einem Keramik- oder Kunststoffmaterial hergestellt ist.

4. Bracket für orthodontischen Bogen (8) nach Anspruch 2, **dadurch gekennzeichnet, dass** es aus einem metallischen Material hergestellt ist.
